# EUROPÄISCHE PATENTSCHRIFT

(11) **EP 2 218 628 B1**
(45) Veröffentlichungstag und Bekanntmachung des Hinweises auf die Patenterteilung: **26.04.2017**
(21) Anmeldenummer: 10000999.2
(22) Anmeldetag: 02.02.2010
(51) Int. Cl.: B62D 7/00, B62D 21/11, B62D 27/04, B62D 27/06, B62D 29/00

(54) **Karosserieanordnung mit Potentialausgleich für ein Kraftfahrzeug**
Bodywork assembly with potential equalisation for a motor vehicle
Agencement de carrosserie doté d'un équilibrage du potentiel pour un véhicule automobile

(30) Priorität: 06.02.2009 DE 102009007850
(43) Veröffentlichungstag der Anmeldung: 18.08.2010
(73) Patentinhaber: Audi AG, 85045 Ingolstadt (DE)
(72) Erfinder: Brok, Tobias, 85092 Kösching (DE); Laukes, Dieter, 85110 Kipfenberg (DE)

(56) Entgegenhaltungen:
- EP-A1- 1 256 510
- EP-A1- 1 731 409
- US-A1- 2007 278 778

## Beschreibung

Karosserieanordnung mit Potentialausgleich für ein Kraftfahrzeug zur elektrisch leitenden Verbindung von aneinander angeordneten Karosseriebauteilen unterschiedlichen Potentials.

Derartige Karosserieanordnungen werden vorzugsweise für den Potentialausgleich als Korrosionsschutz bei gewichtsoptimierten Kraftfahrzeugkarosserien angewandt, deren aneinander angeordnete und aus unterschiedlichen Werkstoffen bestehende Karosseriebauteile zu Kontaktkorrosion neigen.

Die EP 1 731 409 A1 offenbart eine Karosserieanordnung, bei der mehrere Karosseriebauteile einen Hilfsrahmen bilden. Extrudierte Strangpressprofile werden über gegossene Verbindungsbauteile miteinander verbunden, wobei ein direkter Kontakt zwischen den einzelnen Bauteilen hergestellt wird. Die gattungsgemäße EP 1 256 510 A1 zeigt eine ähnliche Karosserieanordnung, bei der Strangpressprofile in einem gegossenen Motorträger, der aus zwei Schalen zusammengesetzt ist, aufgenommen werden. Der Motorträger lagert wiederum einen Dreiecksquerlenker. Bei den gezeigten Karosserieanordnungen besteht die Gefahr, dass ein Elektrolyt in die Kontaktstellen zwischen die Karosseriebauteile eindringt. Das unterschiedliche elektrochemische Potential der aneinander angeordneten Karosseriebauteile führt dazu, dass das unedlere Material eine Anode und das edlere Material eine Kathode ausbildet, wobei die Anode korrodiert wird.

Die US 2007/278778 A1 zeigt daher eine Karosserieanordnung, bei der ein Stahlblechelement an einem Hilfsrahmen aus Aluminium angeordnet ist, wobei ein Potentialausgleich durch eine Schraube dargestellt wird, die eine elastische Lagerbuchse eines Aufhängungsarms hält. Nachteilig ist, dass von der Schraube nur eingeschränkt weitere Fahrzeugbauteile gehalten werden können, da diese eine passende Form oder speziell ausgebildete Adapterstücke benötigen. Zudem erlaubt die Befestigung an einem einzelnen Punkt eine zu große Bewegungsfreiheit für das weitere Fahrzeugbauteil.

Die JP 07117727 A zeigt eine Karosseriestruktur für ein Kraftfahrzeug mit einem inneren Türschweller, bestehend aus Stahl, und einem äußeren Türschweller, bestehend aus Aluminium, die jeweils endständige Flanschhälften aufweisen. Zwischen den beiden Türschwellern ist eine Verstärkung angeordnet, die aus einer Stahlplatte und einer stoffschlüssig damit verbundenen Aluminiumplatte besteht. Dabei steht der stählerne innere Türschweller an seinen Flanschhälften mit der Stahlplatte in Verbindung und der aus Aluminium bestehende äußere Türschweller steht an seinen Flanschhälften mit der Aluminiumplatte in Verbindung. Nachteilig ist jedoch, dass der Einbau der Verstärkung nur für den Zweck des Korrosionsschutzes ein ungenutztes, zusätzliches Gewicht im Kraftfahrzeug verursacht. Weiterhin gestaltet sich die Herstellung der Verstärkung sehr aufwändig und teuer, da die Stahl- und Aluminiumplatte über deren gesamte Oberfläche stoffschlüssig zu verbinden sind und dabei stets die gleichen, zumeist sehr teuren Materialien, wie bei den Türschwellern verwendet werden müssen.

Aufgabe der vorliegenden Erfindung ist es daher eine Karosserieanordnung mit Potentialausgleich für ein Kraftfahrzeug bereitzustellen, die günstig in der Herstellung ist und möglichst wenig ungenutztes Gewicht in das Kraftfahrzeug einbringt.

Diese Aufgabe wird durch die Merkmale des Patentanspruchs 1 gelöst.

Karosserieanordnung mit Potentialausgleich für ein Kraftfahrzeug, aufweisend ein Brückenelement, welches mindestens zwei aneinander angeordnete Karosserieelemente unterschiedlichen Potentials elektrisch leitend verbindet, wobei das Brückenelement eine Haltevorrichtung zur Befestigung eines weiteren Fahrzeugbauteils und ein Basiselement aufweist mit einer ersten und zweiten Verbindungseinrichtung, die als endständige Abschnitte des Basiselements ausgebildet sind, die zur flächigen Anlage auf das entsprechende Karosserieelement kommen und mit diesem über eine Schraube-Mutter-Verbindung, verbunden sind.

Indem die Verbindungseinrichtungen als endständige Abschnitte des Basiselements ausgebildet sind, die zur flächigen Anlage an das entsprechende Karosserieelement kommen, lässt sich eine Verbindungseinrichtung besonders einfach und günstig bereitstellen.
Indem die aneinander angeordneten Karosserieelemente aus unterschiedlichen Materialien und somit auch mit unterschiedlichem elektrochemischen Potential durch ein Brückenelement elektrisch leitend verbunden werden, kann ein steter Potentialausgleich zwischen den Karosserieelementen stattfinden. Somit verringert sich die Wahrscheinlichkeit, dass Flüssigkeit, die in die Verbindungsstelle zwischen den Karosserieelementen eindringt, eine elektrolytisch leitende Verbindung bildet, wodurch das aus dem unedleren Material bestehende Karosserieelement, also das mit dem geringeren elektrochemischen Potential, aufgrund des einsetzenden Stromflusses oxidiert wird. Ein derartiges Brückenelement lässt sich besonders einfach und kostengünstig durch einen gebogenen Blechstreifen realisieren, dessen jeweilige Enden mit den entsprechenden Karosserieelementen in Eingriff stehen. Dadurch, dass das Brückenelement eine Haltevorrichtung trägt, kann ein zusätzliches Fahrzeugbauteil an diesem befestigt werden. Die möglichen Fahrzeugbauteile beschränken sich dabei nicht auf Karosseriebauteile, sondern können verschiedenste Funktionen im Kraftfahrzeug erfüllen. Indem das Brückenelement somit neben dem Potentialausgleich auch noch die Befestigung eines Fahrzeugbauteils ermöglicht, können zwei Funktionen relativ günstig und ohne zusätzliches Gewicht erfüllt werden. Durch die Funktionsintegration in einem Bauteil ergibt sich mehr verfügbarer Bauraum im Kraftfahrzeug und durch die Gewichtsersparnis lässt sich zusätzlich auch der Kraftstoffverbrauch senken, wobei das Brückenelement dabei ein Basiselement und die Haltevorrichtung umfasst, wobei das Basiselement die Haltevorrichtung trägt und durch mindestens eine erste und eine zweite Verbindungseinrichtung mit dem entsprechenden Karosserieelement in Eingriff steht, woraus sich die elektrisch leitende Verbindung zwischen den Karosserieelementen ergibt. Durch die mehrteilige Ausbildung des Brückenelements ergeben sich Vorteile bei der Fertigung des Brückenelements und mehr Möglichkeiten bei dessen Einsatz. So dient das Basiselement als elektrisch leitende Verbindung zwischen den Karosserieelementen, wobei dessen erste und zweite Verbindungseinrichtung eine leitende Verbindung zwischen dem Basiselement und dem entsprechenden Karosserieelement herstellt. An dem Basiselement ist die Haltevorrichtung befestigt, wodurch sich Basiselement und Haltevorrichtung beispielsweise aus unterschiedlichen Materialien fertigen lassen, wobei für das Basiselement der Einsatz von Metallen zweckmäßig ist und die Haltevorrichtung, aufgrund des geringeren Gewichts, aus einem (Leicht-)Metall oder einem Kunststoff bestehen kann.

In einer bevorzugten Ausführung ist die Haltevorrichtung im Wesentlichen flächig ausgebildet und mit dem Basiselement durch mindestens ein elektrisch isolierendes Distanzstück verbunden. Die flächige Ausbildung der Haltevorrichtung erleichtert die sichere Anbindung des Fahrzeugbauteils an die Haltevorrichtung. Durch das mindestens eine elektrisch isolierende Distanzstück werden Ströme, die in die Karosserie des Kraftfahrzeugs eingeleitet werden, nicht auf das Fahrzeugbauteil übertragen.

In einer bevorzugten Ausführung stehen die erste Verbindungseinrichtung mit dem Karosserieelement niedrigeren Potentials und die zweite Verbindungseinrichtung mit dem Karosserieelement höheren Potentials in Eingriff.

In einer bevorzugten Ausführung bestehen das Karosserieelement niedrigeren Potentials aus einer Aluminium-Legierung und das Karosserieelement höheren Potentials aus einer Eisen-Legierung. Die Verbindung von Aluminium-Legierungen mit Stahl stellt derzeit die am weitesten verbreitete Bauart für gewichtsoptimierte Karosserien dar. Natürlich beschränken sich die möglichen Materialkombinationen nicht auf Aluminium-Legierungen und Stähle, sondern umfassen auch weitere gängige Werkstoffe, wie Magnesium, Kupfer oder Titan.

In einer bevorzugten Ausführung ist das Fahrzeugbauteil als eine Steuereinrichtung, insbesondere als ein Steuergerät, ausgebildet.

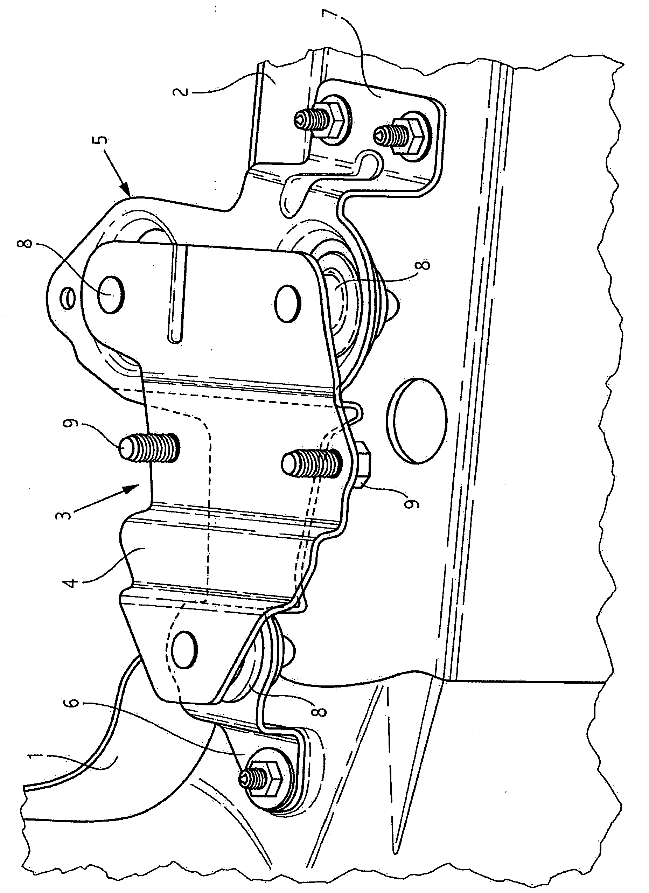

Weitere Einzelheiten, Merkmale und Vorteile der Erfindung ergeben sich aus der nachstehenden Beschreibung eines bevorzugten Ausführungsbeispiels unter Bezugnahme auf die Zeichnung.

Gemäß der Figur weist eine Karosserieanordnung Karosserieelemente 1 und 2 aus unterschiedlichen Werkstoffen und somit auch unterschiedlichen elektrochemischen Potentials auf, wobei ein Karosserieelement niedrigeren Potentials 1 an einem Karosserieelement höheren Potentials 2 zur Anlage kommt und mit diesem kraft- oder stoffschlüssig verbunden ist. Dabei bestehen das Karosserieelement niedrigeren Potentials 1 vorzugsweise aus einer Aluminium-Legierung und das Karosserieelement höheren Potentials 2 vorzugsweise aus einer Eisen-Legierung. Die beiden Karosserieelemente 1 und 2 sind über ein Brückenelement 3 elektrisch leitend miteinander verbunden. Das Brückenelement 3 umfasst ein Basiselement 5 mit endständigen Verbindungseinrichtungen 6 und 7, sowie einer Haltevorrichtung 4. Die Verbindungseinrichtungen 6 und 7 kommen zur flächigen Anlage an das entsprechende Karosserieelement 1 und 2 und werden an diesen mit Schraube-Mutter-Verbindungen befestigt. Dabei steht die erste Verbindungseinrichtung 6 vorliegend mit dem Karosserieelement niedrigen Potentials 1 und die zweite Verbindungseinrichtung 7 mit dem Karosserieelement höheren Potentials 2 in Eingriff. Das Basiselement 5 bildet auf seiner Oberseite eine Ebene aus, auf der die Haltevorrichtung 4 mit Distanzstücken 8 befestigt ist. Die Distanzstücke 8 sind dabei als Gummipuffer ausgebildet, welche die Haltevorrichtung 4 gegenüber dem Basiselement 5 elektrisch isolieren und eventuelle Relativbewegungen der Haltevorrichtung 4 kompensieren. Die Haltevorrichtung 4 ist flächig ausgebildet und trägt Befestigungsmittel 9, die der Befestigung eines Fahrzeugbauteils, beispielsweise eines Steuergeräts, dienen.

### Liste der Bezugszeichen

- 1: Karosserieelement niedrigeren Potentials
- 2: Karosserieelement höheren Potentials
- 3: Brückenelement
- 4: Haltevorrichtung
- 5: Basiselement
- 6: erste Verbindungseinrichtung
- 7: zweite Verbindungseinrichtung
- 8: Distanzstück
- 9: Befestigungsmittel

## Patentansprüche

1. Karosserieanordnung mit Potentialausgleich für ein Kraftfahrzeug, aufweisend ein Brückenelement (3), welches mindestens zwei aneinander angeordnete Karosserieelemente (1, 2) unterschiedlichen Potentials elektrisch leitend verbindet, wobei das Brückenelement (3) ein Basiselement (5) und eine Haltevorrichtung (4) zur Befestigung eines Fahrzeugbauteils umfasst, wobei das Basiselement (5) die Haltevorrichtung (4) trägt und durch mindestens eine erste (6) und eine zweite (7) Verbindungseinrichtung mit dem entsprechenden Karosserieelement (1, 2) in Eingriff steht, woraus sich die elektrisch leitende Verbindung zwischen den Karosserieelementen (1, 2) ergibt und **dadurch gekennzeichnet, dass** die erste und zweite Verbindungseinrichtung (6, 7) als endständige Abschnitte des Basiselements (5) ausgebildet sind, die zur flächigen Anlage auf das entsprechende Karosserieelement (1, 2) kommen und mit diesem durch eine Schraube-Mutter-Verbindung, verbunden sind.

2. Karosserieanordnung mit Potentialausgleich für ein Kraftfahrzeug nach Anspruch 1, **dadurch gekennzeichnet, dass** die Haltevorrichtung (4) im Wesentlichen flächig ausgebildet ist und mit dem Basiselement (5) durch mindestens ein elektrisch isolierendes Distanzstück (8) verbunden ist.

3. Karosserieanordnung mit Potentialausgleich für ein Kraftfahrzeug nach Anspruch 1 oder 2, **dadurch gekennzeichnet, dass** d die erste Verbindungseinrichtung (6) mit dem Karosserieelement niedrigeren Potentials (1) und die zweite Verbindungseinrichtung (7) mit dem Karosserieelement höheren Potentials (2) in Eingriff steht.

4. Karosserieanordnung mit Potentialausgleich für ein Kraftfahrzeug nach einem der Ansprüche 1 bis 3, **dadurch gekennzeichnet, dass** das Karosserieelement niedrigeren Potentials (1) aus einer Aluminium-Legierung besteht und das Karosserieelement höheren Potentials (2) aus einer Eisen-Legierung besteht.

5. Karosserieanordnung mit Potentialausgleich für ein Kraftfahrzeug nach einem der Ansprüche 1 bis 4, **dadurch gekennzeichnet, dass** das Fahrzeugbauteil als eine Steuereinrichtung ausgebildet ist.

## Claims

1. Chassis arrangement with potential equalisation for a motor vehicle, comprising a bridge element (3) which connects at least two chassis elements (1, 2), arranged adjacent to each other, of different potential in an electrically conductive manner wherein the bridge element (3) comprises a basic element (5) and a retaining device (4) for attaching a vehicle component wherein the basic element (5) carries the retaining device (4) and engages with the corresponding chassis element (1, 2) by way of at least one first (6) and one second (7) connection means from which the electrically conductive connection between the chassis elements (1, 2) results and **characterised in that** the first and second connection means (6, 7) are designed as terminal sections of the basic element (5) which come to rest flat on the corresponding chassis element (1, 2) and are connected to said chassis element by a screw-nut connection.

2. Chassis arrangement with potential equalisation for a motor vehicle according to claim 1, **characterised in that** the retaining device (4) is designed substantially flat and is connected to the basic element (5) by at least one electrically insulating spacer (8).

3. Chassis arrangement with potential equalisation for a motor vehicle according to claim 1 or 2, **characterised in that** the first connection means (6) engages with the chassis element of lower potential (1) and the second connection means (7) engages with the chassis element of higher potential (2).

4. Chassis arrangement with potential equalisation for a motor vehicle according to any one of claims 1 to 3, **characterised in that** the chassis element of lower potential (1) consists of an aluminium alloy and the chassis element of higher potential (2) consists of an iron alloy.

5. Chassis arrangement with potential equalisation for a motor vehicle according to any one of claims 1 to 4, **characterised in that** the vehicle component is designed as a control means.

## Revendications

1. Agencement de carrosserie avec équilibrage de potentiel pour un véhicule automobile, comportant un élément en pont (3) qui relie de manière électriquement conductrice au moins deux éléments de carrosserie (1, 2) agencés l'un à côté de l'autre et de potentiels différents, lequel élément en pont (3) comprend un élément de base (5) et un dispositif de maintien (4) pour fixer un composant de véhicule, lequel élément de base (5) supporte le dispositif de maintien (4) et est en prise avec l'élément de carrosserie (1, 2) correspondant au moyen d'au moins un premier (6) et un deuxième (7) dispositif de liaison, ce qui donne la liaison électriquement conductrice entre les éléments de carrosserie (1, 2), **caractérisé en ce que** le premier et le deuxième dispositif de liaison (6, 7) sont conçus comme des tronçons d'extrémité de l'élément de base (5) qui viennent s'appuyer par leur surface contre l'élément de carrosserie (1, 2) correspondant et qui sont reliés à celui-ci par une liaison vis-écrou.

2. Agencement de carrosserie avec équilibrage de potentiel pour un véhicule automobile selon la revendication 1, **caractérisé en ce que** le dispositif de maintien (4) est conçu globalement comme une surface et est relié à l'élément de base (5) par au moins une pièce d'écartement (8) électriquement isolante.

3. Agencement de carrosserie avec équilibrage de potentiel pour un véhicule automobile selon la revendication 1 ou 2, **caractérisé en ce que** le premier dispositif de liaison (6) est en prise avec l'élément de carrosserie à potentiel inférieur (1) et le deuxième dispositif de liaison (7) est en prise avec l'élément de carrosserie à potentiel supérieur (2).

4. Agencement de carrosserie avec équilibrage de potentiel pour un véhicule automobile selon l'une des revendications 1 à 3, **caractérisé en ce que** l'élément de carrosserie à potentiel inférieur (1) est en un alliage d'aluminium et l'élément de carrosserie à potentiel supérieur (2) est en un alliage de fer.

5. Agencement de carrosserie avec équilibrage de potentiel pour un véhicule automobile selon l'une des revendications 1 à 4, **caractérisé en ce que** le composant de véhicule est conçu comme un dispositif de commande.
